# EUROPÄISCHE PATENTSCHRIFT

(11) **EP 0 434 609 B1**
(45) Veröffentlichungstag und Bekanntmachung des Hinweises auf die Patenterteilung: **21.09.1994**
(21) Anmeldenummer: 90810924.2
(22) Anmeldetag: 27.11.1990
(51) Int. Cl.: C09B 44/20, C09B 44/04, D06P 3/76, C09B 67/22, C09B 67/32, C09B 67/34

(54) **Verfahren zum Färben von Polyacrylnitrilmaterialien**
Process for dying polyacrylonitrite materials
Méthode de teinture de matériaux polyacrylonitriles

(30) Priorität: 06.12.1989 CH 4367/89
(43) Veröffentlichungstag der Anmeldung: 26.06.1991
(73) Patentinhaber: CIBA-GEIGY AG, 4002 Basel (CH)
(72) Erfinder: Herter, Wilfried, Dr., W-7888 Rheinfelden (DE); Koller, Josef, CH-4153 Reinach (CH)

(56) Entgegenhaltungen:
- EP-A- 0 066 405
- EP-A- 0 112 282
- EP-A- 0 114 574
- DE-A- 1 943 799
- FR-A- 2 352 041
- GB-A- 1 411 243
- GB-A- 2 001 666
- US-A- 3 455 898
- US-A- 4 382 801

## Beschreibung

Die vorliegende Erfindung betrifft ein Verfahren zum Färben von Polyacrylnitrilmaterialien, Farbstoffe zur Durchführung dieses Verfahrens sowie feste und flüssige Farbstoffzubereitungen.

Zum Färben von Polyacrylnitrilmaterialien in blauen Tönen werden u.a. kationische Azofarbstoffe verwendet, welche durch Kuppeln von diazotierten 2-Aminobenzthiazolen auf substituierte Aniline hergestellt werden. Die z.Zt. verwendeten Farbstoff (siehe z.B. GB-A- 1 411 243, DE-A- 1 943 799, US-A- 4 382 801 und GB-A- 2 001 666) erfüllen jedoch noch nicht in allen Eigenschaften die an sie gestellten Forderungen optimal. So ist z.B. die Dämpf- und Dekaturechtheit der mit den bekannten blauen Farbstoffen erzielten Färbungen noch nicht immer vollständig befriedigend und auch die Reduktions- und pH-Stabilität der Farbstoffpräparate oder Färbebäder lässt manchmal noch Wünsche übrig.

Es bestand daher das Bedürfnis nach neuen blauen Farbstoffen und einem Färbeverfahren, welches die obengenannten Nachteile in vermindertem Masse oder gar nicht aufweist. Es wurde gefunden, dass das erfindungsgemässe Färbeverfahren und die erfindungsgemässen Farbstoffe diesen Anforderungen genügen.

Gegenstand der vorliegenden Erfindung ist daher ein Verfahren zum Färben von Polyacrylnitrilmateriälien, welches dadurch gekennzeichnet ist, dass man einen Farbstoff der Formel 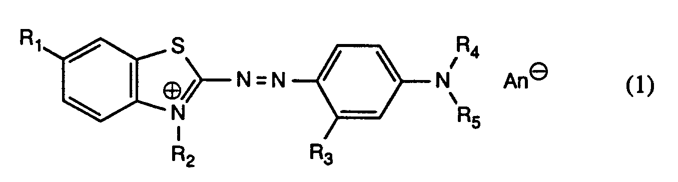
verwendet, worin
R₁ C₁-C₄-Alkoxy oder Chlor,
R₂ C₁-C₄-Alkyl,
R₃ C₁-C₄-Alkyl,
R₄ C₁-C₂-Alkyl,
R₅ Hydroxyethyl oder Hydroxypropyl und
An^{⊖} ein Anion bedeuten, wobei R₃ und R₄ nicht beide gleichzeitig Ethyl sind.

Die Alkyl- und Alkoxygruppen in der obigen Formel (1) können geradkettig oder verzweigt sein. In Frage kommen z.B. Methyl, Ethyl, n-Propyl, iso-Propyl, n-, sec- oder tert.-Butyl, Methoxy, Ethoxy, n- oder iso-Propoxy sowie n-, sec- oder tert.-Butoxy.

Als Hydroxypropylgruppe kommt z.B. 3-Hydroxypropyl-1 oder vor allem 2-Hydroxypropyl-1 in Betracht.

Als Anionen An^{⊖} kommen sowohl anorganische wie organische Anionen in Frage; beispielsweise sind genannt: Halogenid-, wie Chlorid-, Bromid- oder Jodid-, Sulfat, Methylsulfat-, Bortetrafluorid-, Aminosulfonat-, Perchlorat-, Carbonat-, Bicarbonat-, Phosphat-, Phosphormolybdat-, Phosphorwolframat-, Phosphorwolframmolybdat-, Benzolsulfonat-, Naphthalinsulfonat-, 4-Chlorbenzolsulfonat-, Oxalat-, Maleinat-, Acetat-, Propionat-, Lactat-, Succinat-, Chloracetat-, Tartrat-, Methansulfonat- oder Benzoationen, oder komplexe Anionen, wie das von Chlorzinkdoppelsalzen.

Das Anion ist im allgemeinen durch das Herstellungsverfahren vorgegeben. Vorzugsweise liegen die Chloride, Hydrogensulfate, Sulfate, Methosulfate, Phosphate, Formiate, Lactate oder Acetate vor. Die Anionen können in bekannter Weise gegen andere Anionen ausgetauscht werden.

Eine bevorzugte Ausführungsform der Erfindung ist dadurch gekennzeichnet, dass man einen Farbstoff der Formel (1) verwendet, worin R₁ Methoxy oder Ethoxy ist.

Ausserdem ist die Verwendung von solchen Farbstoffen der Formel (1) bevorzugt, bei denen R₂ Methyl oder Ethyl ist, sowie von solchen, bei denen R₃ Methyl oder Ethyl ist.

R₄ bedeutet Methyl oder Ethyl und R₅ ist bevorzugt Hydroxyethyl.

Das besonders bevorzugte erfindungsgemässe Verfahren besteht darin, dass man einen Farbstoff der Formel 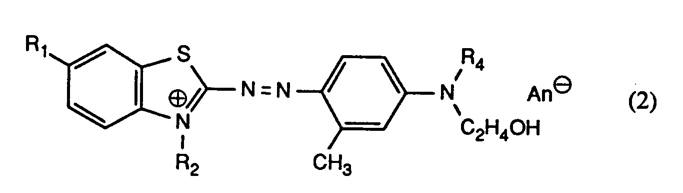
verwendet, worin R₂ und R₄ unabhängig voneinander je Methyl oder Ethyl und R₁ Methoxy oder Ethoxy bedeutet. Vorzugsweise bedeutet R₂ Methyl, R₄ Ethyl und R₁ Methoxy.

Die Farbstoffe der Formel (1) sind neu und stellen einen weiteren Gegenstand der vorliegenden Erfindung dar.

Unter diesen sind diejenigen der Formel (1) bevorzugt, worin R₁ Methoxy oder Ethoxy, R₂ und R₄ unabhängig voneinander Methyl oder Ethyl, R₃ Methyl und R₅ Hydroxyethyl bedeuten.

Besonders bevorzugte Farbstoffe entsprechen der Formel 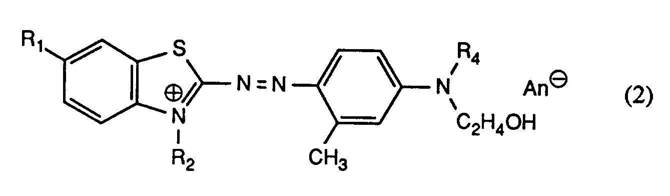
worin R₁ Ethoxy oder vor allem Methoxy und R₂ und R₄ unabhängig voneinander je Methyl oder Ethyl bedeuten. In ganz besonders bevorzugten Farbstoffen der Formel (2) bedeutet R₂ Methyl und R₄ Ethyl.

Die neuen kationischen Azofarbstoffe der Formel (1) können nach an sich bekannten Verfahren hergestellt werden. Man erhält sie beispielsweise, indem man eine Verbindung der Formel 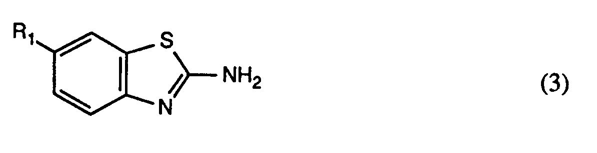
diazotiert, auf eine Kupplungskomponente der Formel 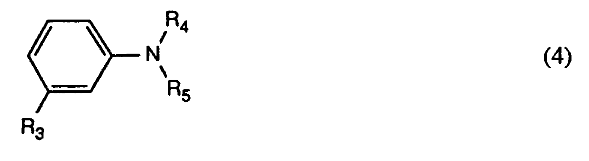
kuppelt und das Kupplungsprodukt mit einer Verbindung der Formel

R₂-An (5)

quaterniert, wobei R₁, R₃, R₄, R₅ und R₂ wie bei der Formel (1) definiert sind und An einen bei der Quaternierung in das Anion An^{⊖} überführbaren Rest bedeutet.

Die Verbindungen der Formel (3) sind bekannt oder können nach an sich bekannten Methoden hergestellt werden. Ebenfalls bekannt oder nach an sich bekannten Methoden herstellbar sind die Kupplungskomponenten der Formel (4) sowie die Verbindungen der Formel (5).

Die Diazotierung der Verbindungen der Formel (3) erfolgt in an sich bekannter Weise, etwa mit Natriumnitrit in saurem, z.B. salzsaurem oder schwefelsaurem, wässrigem Medium. Die Diazotierung kann aber auch mit anderen Diazotierungsmitteln, z.B. mit Nitrosylschwefelsäure ausgeführt werden. Dabei kann eine zusätzliche Säure im Reaktionsmedium anwesend sein, z.B. Phosphorsäure, Schwefelsäure, Essigsäure, Salzsäure oder Mischungen dieser Säuren, z.B. Mischungen aus Phosphorsäure und Essigsäure. Zweckmässig wird die Diazotierung bei Temperaturen von -10 bis 30°C, z.B. von -10°C bis Raumtemperatur, durchgeführt.

Die Kupplung der diazotierten Verbindung der Formel (3) auf die Kupplungskomponente der Formel (4) erfolgt ebenfalls in bekannter Weise, beispielsweise in saurem, wässrigem oder wässrig-organischem Medium, vorteilhaft bei Temperaturen von - 10 bis 30°C, insbesondere unter 10°C. Als Säuren verwendet man z.B. Salzsäure, Essigsäure, Schwefelsäure oder Phosphorsäure. Diazotierung und Kupplung können beispielsweise im Eintopfverfahren, also im gleichen Reaktionsmedium, durchgeführt werden.

Die Quaternierung erfolgt zweckmässig in einem indifferenten organischen Lösungsmittel, beispielsweise in einem Kohlenwasserstoff, Chlorkohlenwasserstoff oder Nitrokohlenwasserstoff, wie Benzol, Toluol, Xylol, Tetrachlorethan, Chloroform, Tetrachlorkohlenstoff, Mono- oder Dichlorbenzol oder Nitrobenzol, in einem Säureamid oder Säureanhydrid, wie Dimethylformamid, N-Methylacetamid oder Essigsäureanhydrid, in Dimethylsulfoxid oder in einem Keton, wie Aceton oder Methylethylketon. Anstelle eines organischen Lösungsmittels kann auch ein Ueberschuss des Alkylierungsmittels verwendet werden. Es kann aber auch in wässrigem Medium gearbeitet werden, z.B. in wässriger Suspension oder etwa in Eisessig. Die Quaternierung wird vorteilhaft bei erhöhter Temperatur durchgeführt, z.B. zwischen ca. 50 und 130°C beim Arbeiten in organischem Lösungsmittel oder in reinem Dimethylsulfat oder zwischen ca. 20 und 60°C beim Arbeiten in wässriger Phase. Die Quaternierung wird gegebenenfalls unter Zusatz von säurebindenden Mitteln, wie einer anorganischen Base, z.B. NaOH, KOH, Natriumacetat, Magnesiumoxid, Magnesiumcarbonat, Soda, Calciumcarbonat oder Natriumbicarbonat und gegebenenfalls unter Druck, vorgenommen. Die jeweils günstigsten Bedingungen lassen sich durch einen Vorversuch leicht ermitteln.

Es werden zur Quaternierung bekannte Quaternierungsmittel R₂-An eingesetzt, die den Rest R₂ einführen und deren Rest An in das Anion An^{⊖} übergeführt wird. Einige Beispiele für Quaternierungsmittel R₂-An sind: Alkylhalogenide, Alkylester der Schwefelsäure oder Alkylester organischer Sulfonsäuren, beispielsweise Methylchlorid, -bromid oder -jodid, Ethylchlorid, -bromid oder -jodid, Propylbromid oder -jodid, Butylbromid, Dimethylsulfat, Diethylsulfat, Dibutylsulfat, Benzolsulfonsäuremethylester, Methansulfonsäuremethyl-, p-Toluolsulfonsäuremethyl-, -ethyl-, -propyl- oder -butylester, n- und iso-Propyl- und n-, sec.- und tert.-Butylester der Benzolsulfonsäure oder 1-Chlorbuten-(2).

Der Rest An bedeutet also vorzugsweise Halogen (z.B. Cl, Br, J), Alkyl-SO₄-, Arylsulfonat oder Alkylsulfonat.

Nach der Quaternierung können die neuen Verbindungen der Formel (1) vom Reaktionsmedium getrennt und getrocknet oder direkt als Lösung verwendet werden. Falls gewünscht oder erforderlich, (z.B. aus Gründen der Löslichkeit) kann in den erhaltenen Verbindungen der Formel (1) das Anion An^{⊖} in an sich bekannter Weise gegen ein anderes Anion ausgetauscht werden.

Die Azoverbindungen der Formel (1) werden sowohl als Pulver- bzw. Granulat-Präparationen als auch in Form von konzentrierten Lösungen zum Einsatz gebracht. Pulver-Präparationen werden in üblicher Weise mit Stellmaterialien wie Natriumsulfat, -phosphat, -chlorid-, -acetat in Gegenwart von Entstaubungsmitteln eingestellt, oder die Azoverbindungen werden direkt als Sprühtrocknungspräparationen in den Handel gebracht. Konzentrierte Farbstofflösungen können wässriger oder wässrig/organischer Art sein, wobei übliche und möglichst gut abbaubare Zusätze bevorzugt werden wie organische Säuren, vorzugsweise Essigsäure, Ameisensäure, Milchsäure, Zitronensäure, Amide wie Formamid, Dimethylformamid, Harnstoff, Alkohole wie Glykol, Diglykol, Diglykolether, vorzugsweise Methyl- oder Ethylether.

Verwendung finden die neuen kationischen Azofarbstoffe der Formel (1) zum Färben und, unter Zusatz von Binde- und Lösungsmitteln, zum Bedrücken von mit kationischen Farbstoffen anfärbbaren Materialien, insbesondere Textilfasermaterialien; diese Materialien bestehen z.B. aus Homo- oder Mischpolymerisaten des Acrylnitrils (Polyacrylnitril) oder synthetischen Polyamiden oder Polyestern, welche durch saure Gruppen modifiziert sind. Desweiteren dienen die neuen kationischen Azoverbindungen auch zum Färben von Nasskabel (Färben von Fasern im Gelzustand), Kunststoffmassen, vorzugsweise aus den angegebenen Polymeren, sowie von tannierten Cellulosematerialien, von Leder und Papier und zum Färben von Mischgeweben aus Polyacrylnitrilmaterial und Wolle.

Zum Färben mit den kationischen Farbstoffen der allgemeinen Formel (1) eignen sich insbesondere Flocken, Fasern, Fäden, Bänder, Gewebe oder Gewirke aus Polyacrylnitril oder aus mindestens 85 % Acrylnitril-Anteil enthaltenden Mischpolymerisaten des Acrylnitrils mit anderen Vinylverbindungen, wie Vinylchlorid, Vinylidenchlorid, Vinylfluorid, Vinylacetat, Vinylpyridin, Vinylimidazol, Vinylalkohol, Acryl- und Methacrylsäureestern und -amiden, as. Dicyanethylen. Ebenso können Flocken, Fasern, Fäden, Bänder, Gewebe oder Gewirke aus sauer modifizierten synthetischen Materialien, insbesondere aus sauer modifizierten aromatischen Polyestern sowie sauer modifizierten Polyamidfasern gefärbt werden. Sauer modifizierte aromatische Polyester sind beispielsweise Polykondensationsprodukte aus Sulfoterephthalsäure und Aethylenglykol, d.h. sulfonsäuregruppenhaltige Polyethylenglykolterephthalate.

Man färbt vorzugsweise aus wässrigem neutralem oder saurem Medium nach dem Ausziehverfahren, gegebenenfalls unter Druck oder nach dem Kontinueverfahren. Man geht dabei z.B. bei etwa 20 bis 60°C mit dem zu färbenden Material in das Färbebad ein und färbt dann bei Kochtemperatur. Man kann auch unter Druck über 100°C, z.B. bei 110-130°C, in einem Druckfärbeapparat färben. Sofern Textilmaterial gefärbt wird, kann dieses dabei in verschiedenartigster Form vorliegen, beispielsweise als Faser, Faden, Gewebe, Gewirke, Stückware oder Fertigware.

Die erfindungsgemässen Verbindungen der Formel (1) führen, wenn sie auf die oben genannten Materialien appliziert werden, zu blauen Färbungen bzw. Drucken, die sich durch sehr gute Eigenschaften, vor allem hohe Reduktions- und pH-Stabilität, Reib- und Sublimierechtheit, sehr gutes Ziehvermögen und hohe Lichtechtheit auszeichnen. Hervorzuheben sind vor allem die hohen Dämpf- und Dekaturechtheiten.

Die erfindungsgemässen Verbindungen der Formel (1) können als Farbstoffe für die oben beschriebenen Zwecke als Einzelverbindungen oder aber in Mischungen verwendet werden, die mindestens 2 Verbindungen der Formel (1) enthalten.

Ferner eignen sich die Farbstoffe der Formel (1) als Blaukomponente im Gemisch mit einem kationischen gelben und einem kationischen roten Farbstoff zum Trichromiefärben von Polyacrylnitrilmaterial.

Schliesslich finden sie noch Verwendung in Farbstoffmischungen zum Färben in marineblauen oder schwarzen Nuancen. Dazu wird mindestens ein blauer Farbstoff der Formel (1) mit einem gelben und einem roten und gewünschtenfalls einem weiteren blauen Farbstoff vermischt.

Die folgenden Beispiele veranschaulichen die Erfindung weiter; Teile und Prozente beziehen sich, sofern nichts anderes angegeben ist, auf das Gewicht.

### Beispiel 1:

a) 90 Teile 2-Amino-6-methoxi-benzothiazol werden in 600 Teilen 48%-iger Schwefelsäure angeschlämmt und mit 165 Teilen 40%-iger Nitrosylschwefelsäure innerhalb einer Stunde bei -10 bis -5°C diazotiert. Nach einstündigem Rühren bei - 10 bis -5°C wird der Ueberschuss an Diazotierungsreagens mit Amidosulfonsäure vernichtet. Man erhält eine tiefrote Diazolösung.
   92 Teile N-Ethyl-N-hydroxiethyl-1,3-toluidin werden in 130 Teilen 26%-iger Schwefelsäure gelöst, und durch Zugabe von 225 Teilen Eis auf - 10 bis -5°C gekühlt. Zu dieser Lösung wird die zuvor hergestellte Diazolösung innerhalb von 10 Minuten bei -10 bis -5°C zugetropft. Die entstandene schwarzgrüne Suspension wird nach einstündigem Rühren durch Zugabe von ca 950 Teilen 30%-iger Natronlauge auf pH 1,5 gestellt, gleichzeitig lässt man die Temperatur auf maximal 25°C ansteigen. Nach Filtration und 3-maligem Waschen mit jeweils 500 Teilen Wasser erhält man 150 Teile Azofarbstoff, entsprechend einer Ausbeute von 81 % der Theorie.
b) 37 Teile dieses Azofarbstoffs werden unter Zusatz von 0,5 Teilen eines kationischen Dispergators bei 20 bis 25°C in 180 Teilen Wasser angeschlämmt und mit 38 Teilen Dimethylsulfat versetzt. Während der zweistündigen Umsetzung bei 20 bis 25°C wird der pH-Wert durch Zudosieren von ca. 100 Teilen einer 40%-igen wässrigen Natriumacetatlösung zwischen pH 3 und 4 gehalten. Anschliessend wird der pH mit ca. 7 Teilen 32%-iger Salzsäure auf 1,5 eingestellt und der gebildete Farbstoff durch Zugabe von 400 Teilen einer 6%-igen wässrigen Natriumchloridlösung und anschliessend weiteren 20 Teilen festem Natriumchlorid ausgefällt. Durch Filtration, Nachwaschen mit 400 Teilen einer 6%-igen wässrigen Natriumchloridlösung, scharfes Absaugen und Trocknen bei 60 bis 70°C erhält man 37 Teile des Farbstoffes der Formel 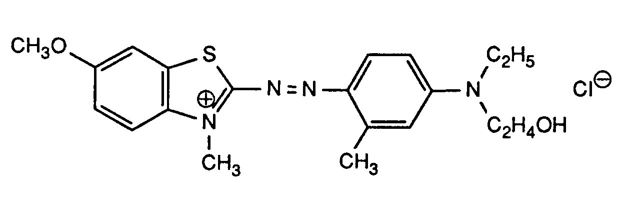 Der Farbstoff färbt Textilmaterial aus Polyacrylnitril in einem reinblauen Farbton.
   Die Färbung weist ein hohes Niveau bezüglich Licht-, Dämpf- und Dekaturechtheit auf.
   Bei der Färbung von Mischgeweben, welche Polyacrylnitril und Wolle enthalten, zeichnet sich der obige Farbstoff weiterhin durch eine hohe Reduktions- und pH-Stabilität sowie gute Reserveeigenschaften aus.

Beispiel 2: 37 Teile des gemäss Beispiel 1a) erhaltenen Azofarbstoffs werden in 65 Teilen Eisessig angeschlämmt, mit 1,4 Teilen Magnesiumoxid versetzt und die entstandene Suspension auf 50°C aufgeheizt. Innerhalb einer Stunde werden bei 50 bis 60°C 19 Teile Dimethylsulfat gleichmässig zugetropft und die Reaktionsmischung weitere 3 Stunden gerührt. Durch Zugabe von ca. 20 Teilen einer 10%-igen wässrigen Natriumacetatlösung wird der pH auf 2,2 eingestellt und unter leichtem Vakuum das Nebenprodukt Essigsäuremethylester destillativ entfernt. Nach sorgfältiger Klärfiltration unter Zugabe eines Kieselgur-Filtrierhilfsmittels erhält man eine konzentrierte Lösung des kationischen Farbstoffs der im Beispiel 1b) angegebenen Formel. Die Lösung kann beliebig mit Wasser, Eisessig oder anderen Lösungsmitteln verdünnt und direkt zum Färben von Polyacrylnitril oder polyacrylnitrilhaltigen Mischgeweben verwendet werden. Das Echtheitsniveau der erhaltenen Färbungen entspricht dem des Beispiels 1.

Beispiel 3:100 Teile Polyacrylnitril-Garn (Orlon) werden in einer Laborfärbeapparatur in 4000 Teilen einer wässrigen Färbeflotte, enthaltend 0,24 Teile des kationischen Farbstoffs aus Beispiel 1,1 Teil eines handelsüblichen kationischen Retarders, 10 Teile Natriumsulfat (wasserfrei) und 1 Teil Natriumacetat, gefärbt, indem man das Garn bei 30°C in die Flotte einbringt, innerhalb 45 Minuten gleichmässig auf 100°C aufheizt und weitere 90 Minuten bei 100°C ausfärbt. Man erhält eine blaue egale Färbung.

Beispiele 4-21: In analoger Weise wie in den Beispielen 1 und 2 beschrieben werden folgende Farbstoffe erhalten:

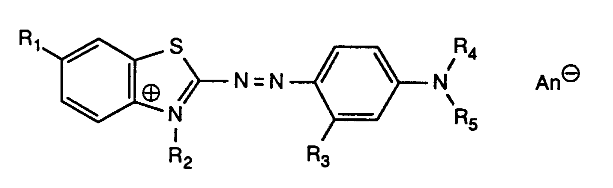

| Beispiel | R₁ | R₂ | R₃ | R₄ | R₅ |
|---|---|---|---|---|---|
| 4 | OC₂H₅ | CH₃ | CH₃ | C₂H₅ | C₂H₄OH |
| 5 | OCH₃ | CH₃ | CH₃ | CH₃ | C₂H₄OH |
| 6 | OC₂H₅ | CH₃ | CH₃ | CH₃ | C₂H₄OH |
| 7 | OCH₃ | C₂H₅ | CH₃ | C₂H₅ | C₂H₄OH |
| 8 | OC₂H₅ | C₂H₅ | CH₃ | C₂H₅ | C₂H₄OH |
| 9 | OCH₃ | C₂H₅ | CH₃ | CH₃ | C₂H₄OH |
| 10 | OC₂H₅ | C₂H₅ | CH₃ | CH₃ | C₂H₄OH |
| 11 | OCH₃ | CH₃ | CH₃ | CH₃ | C₃H₆OH |
| 12 | OC₂H₅ | CH₃ | CH₃ | C₂H₅ | CH₂-CHOH-CH₃ |
| 13 | Cl | CH₃ | CH₃ | C₂H₅ | C₂H₄OH |
| 14 | Cl | CH₃ | CH₃ | CH₃ | C₂H₄OH |
| 15 | OCH₃ | CH₃ | C₂H₅ | C₂H₅ | C₂H₄OH |
| 16 | OC₂H₅ | CH₃ | C₂H₅ | CH₃ | C₂H₄OH |
| 17 | OC₂H₅ | CH₃ | C₂H₅ | C₂H₅ | C₂H₄OH |
| 18 | OCH₃ | CH₃ | C₂H₅ | CH₃ | C₂H₄OH |
| 19 | OC₂H₅ | CH₃ | C₂H₅ | CH₃ | C₂H₄OH |
| 20 | OC₂H₅ | C₂H₅ | C₂H₅ | CH₃ | C₂H₄OH |
| 21 | OCH₃ | C₂H₅ | C₂H₅ | C₂H₅ | C₂H₄OH |

Färbt man Polyacrylnitril-Garn (Orlon) entsprechend Beispiel 3, jedoch unter Verwendung der Farbstoffe der Beispiele 4 bis 21, so erhält man ebenfalls rein blaue bis rotstichig blaue Färbungen.

Beispiel 22:100 Teile Polyacrylnitril-Garn (Orlon) werden in einer Laborfärbeapparatur in 4000 Teilen einer wässrigen Färbeflotte, enthaltend 0,39 Teile des Farbstoffs aus Beispiel 1, 0,87 Teile des gelben Farbstoffs der Formel 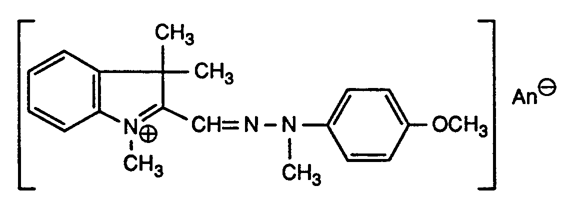
(Handelsform, enthaltend 34 Gew.-% des Farbstoffkations), 0,195 Teile des roten Farbstoffs der Formel 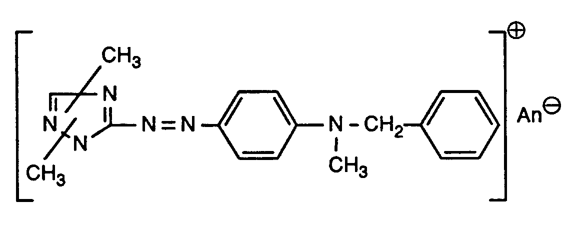
(Handelsform, enthaltend 50 Gew.-% des Farbstoffkations), 1 Teil eines handelsüblichen kationischen Retarders, 10 Teile Natriumsulfat (wasserfrei) und 1 Teil Natriumacetat, gefärbt, indem man das Garn bei 30°C in die Flotte einbringt, innerhalb 45 Minuten gleichmässig auf 100°C aufheizt und weitere 90 Minuten bei 100°C ausfärbt. Man erhält eine Färbung in einem reinen Schwarzton.

Beispiel 23: 100 Teile Polyacrylnitril-Garn (Orlon) werden in einer Laborfärbeapparatur in 4000 Teilen einer wässrigen Färbeflotte, enthaltend 0,25 Teile des kationischen Farbstoffs aus Beispiel 1, 0,9 Teile des gelben Farbstoffs aus Beispiel 22, 0,315 Teile des roten Farbstoffs aus Beispiel 22, 0,405 Teile des blauen Farbstoffs der Formel 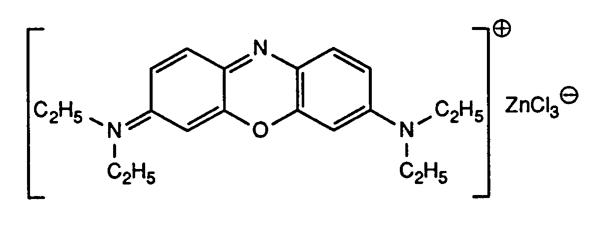
(Handelsform, enthaltend 40 Gew.-% des Farbstoffkations), 1 Teil eines handelsüblichen kationischen Retarders, 10 Teile Natriumsulfat (wasserfrei) und 1 Teil Natriumacetat, gefärbt, indem man das Garn bei 30°C in die Flotte einbringt, innerhalb 45 Minuten gleichmässig auf 100°C aufheizt und weiter 90 Minuten bei 100°C ausfärbt. Man erhält eine Färbung in einem reinen Schwarzton.

Beispiel 24: Analog zu Beispiel 22 erhält man schwarze Färbungen, wenn man anstatt des Farbstoffs aus Beispiel 1 äquivalente Mengen der Farbstoffe der Beispiele 4 bis 21 verwendet.

Beispiel 25: Analog zu Beispiel 23 erhält man schwarze Färbungen, wenn man anstelle des blauen Azofarbstoffs aus Beispiel 1 äquivalente Mengen eines Farbstoffes aus den Beispielen 4 bis 21 verwendet und den blauen Oxazinfarbstoff aus Beispiel 23 oder statt diesem äquivalente Mengen eines der folgenden Farbstoffe:

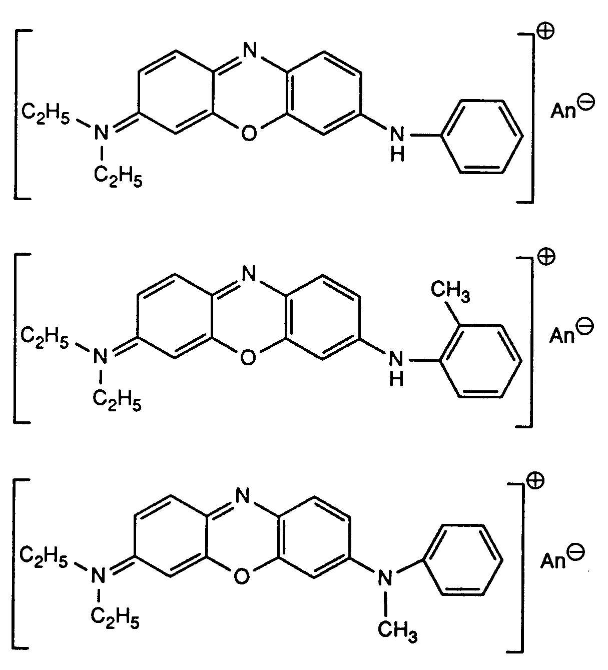

Beispiel 26: Analog zu den Beispielen 22 bis 25 erhält man schwarze Färbungen, wenn man anstelle des gelben Farbstoffes der im Beispiel 22 angegebenen Formel äquivalente Mengen des gelben Farbstoffes der Formel 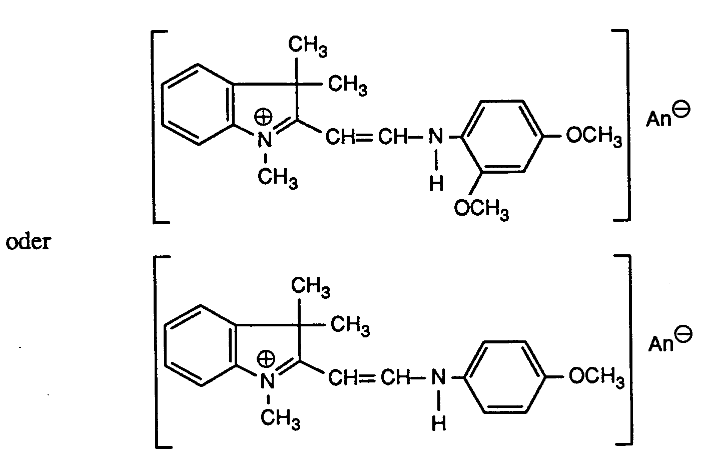
und/oder anstelle des roten Farbstoffes der im Beispiel 22 angegebenen Formel äquivalente Mengen des roten Farbstoffes der Formel 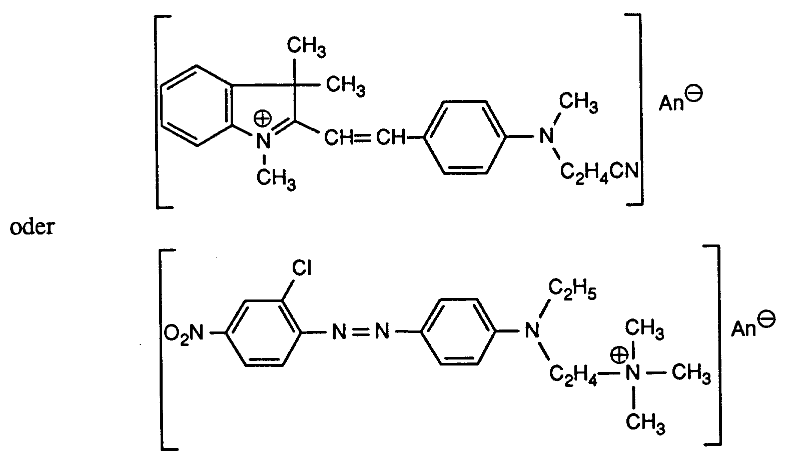 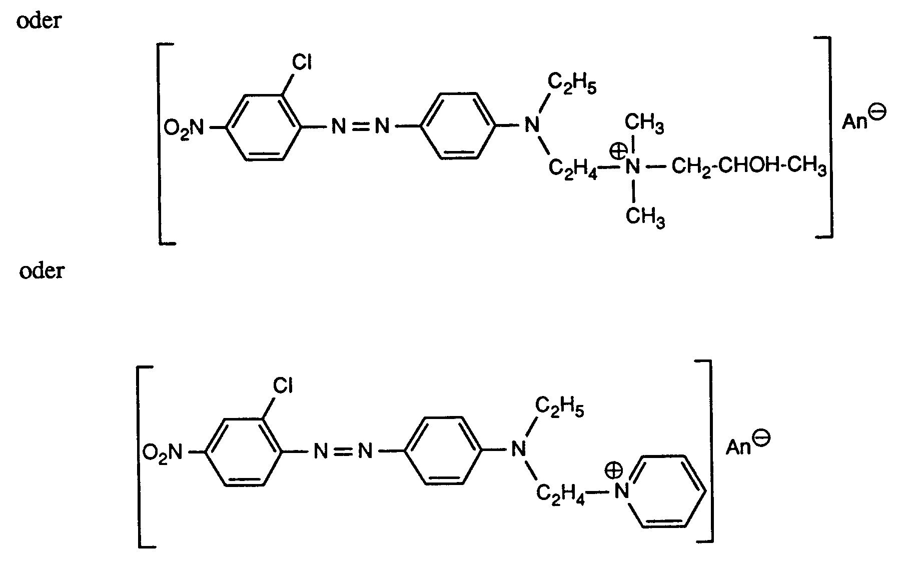
verwendet.

Beispiel 27: 4 g eines Polyacrylnitril/Wolle-Stapelmischgewebes, enthaltend einen PAC-Anteil von 55 %, werden in einen AHIBA-Laborfärbeapparat, enthaltend eine wässrige Färbeflotte mit 5 % Glaubersalz calz., 2 % Essigsäure 80 % und 1 % eines handelsüblichen Fällungsinhibitors, bei ca. 50°C eingefahren. Nach 10 Minuten werden 0,15 % des blauen Farbstoffs der Formel 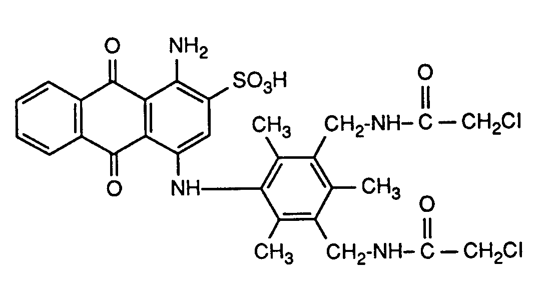
zugesetzt und das Färbebad anschliessend innert 30 bis Minuten auf eine Temperatur von 80°C erhitzt. Nach Einstellen des pH-Wertes auf 4 bis 4,5 werden 0,05 % des kationischen Farbstoffes aus Beispiel 1 zugesetzt, dann das Färbebad innert weiterer 30 bis 40 Minuten auf eine Temperatur von 98-100°C weiter erhitzt und während 45 Minuten bei dieser Temperatur gehalten (Flottenverhältnis 1:40). Man lässt das Färbebad abkühlen, spült anschliessend und erhält ein einwandfrei uni-blau gefärbtes Gewebe.

## Patentansprüche

1. Verfahren zum Färben von Polyacrylnitrilmaterialien, dadurch gekennzeichnet, dass man einen Farbstoff der Formel 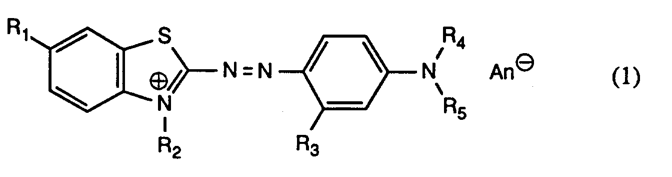 verwendet, worin
R₁ C₁-C₄-Alkoxy oder Chlor,
R₂ C₁-C₄-Alkyl,
R₃ C₁-C₄-Alkyl,
R₄ C₁-C₂-Alkyl,
R₅ Hydroxyethyl oder Hydroxypropyl und
An^{⊖} ein Anion bedeuten, wobei R₃ und R₄ nicht beide gleichzeitig Ethyl sind.

2. Verfahren gemäss Anspruch 1, dadurch gekennzeichnet, dass man einen Farbstoff der Formel (1) verwendet, worin R₁ Methoxy oder Ethoxy ist.

3. Verfahren gemäss einem der Ansprüche 1 oder 2, dadurch gekennzeichnet, dass man einen Farbstoff der Formel (1) verwendet, worin R₂ Methyl oder Ethyl, vor allem Methyl, ist.

4. Verfahren gemäss einem der Ansprüche 1 bis 3, dadurch gekennzeichnet, dass man einen Farbstoff der Formel (1) verwendet, worin R₃ Methyl oder Ethyl, vor allem Methyl, ist.

5. Verfahren gemäss einem der Ansprüche 1 bis 4, dadurch gekennzeichnet, dass man einen Farbstoff der Formel (1) verwendet, worin R₄ Methyl oder Ethyl und R₅ Hydroxyethyl ist.

6. Verfahren gemäss Anspruch 1, dadurch gekennzeichnet, dass man einen Farbstoff der Formel 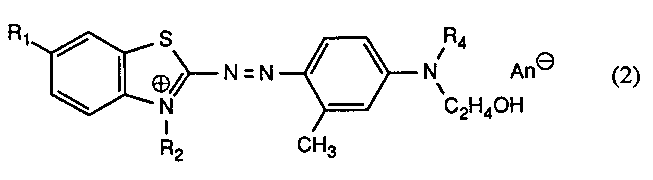 verwendet, worin R₂ und R₄ unabhängig voneinander je Methyl oder Ethyl und R₁ Methoxy oder Ethoxy bedeutet.

7. Verfahren gemäss Anspruch 6, dadurch gekennzeichnet, dass man einen Farbstoff der Formel (2) verwendet, worin R₁ Methoxy, R₂ Methyl und R₄ Ethyl bedeutet.

8. Farbstoffe der Formel 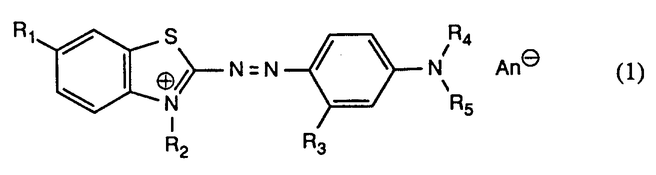 worin
R₁ C₁-C₄-Alkoxy oder Chlor,
R₂ C₁-C₄-Alkyl,
R₃ C₁-C₄-Alkyl,
R₄ C₁-C₂-Alkyl,
R₅ Hydroxyethyl oder Hydroxypropyl und
An^{⊖} ein Anion bedeuten, wobei R₃ und R₄ nicht beide gleichzeitig Ethyl sind.

9. Farbstoffe gemäss Anspruch 8, worin R₁ Methoxy oder Ethoxy, R₂ und R₄ unabhängig voneinander Methyl oder Ethyl, R₃ Methyl und R₅ Hydroxyethyl bedeuten.

10. Farbstoffe der Formel 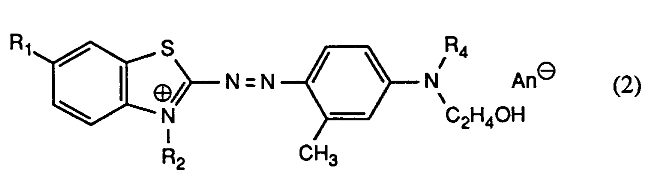 worin R₂ und R₄ unabhängig voneinander je Methyl oder Ethyl und R₁ Methoxy oder Ethoxy bedeutet.

11. Verfahren zur Herstellung der Farbstoffe gemäss Anspruch 8, dadurch gekennzeichnet, dass man eine Verbindung der Formel 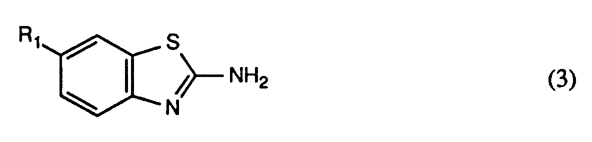 diazotiert, auf eine Kupplungskomponente der Formel 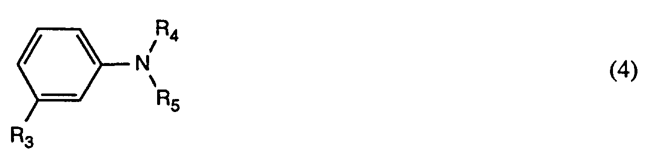 kuppelt und das Kupplungsprodukt mit einer Verbindung der Formel
R₂-An (5)
quaterniert, wobei R₁, R₃, R₄, R₅ und R₂ wie bei der Formel (1) definiert sind und An einen bei der Quaternierung in das Anion An^{⊖} überführbaren Rest bedeutet.

12. Das nach dem Verfahren gemäss einem der Ansprüche 1 bis 7 erhaltene gefärbte Polyacrylnitrilmaterial.

13. Feste Farbstoffzubereitungen zum Färben von Polyacrylnitrilmaterialien, dadurch gekennzeichnet, dass sie mindestens einen Farbstoff gemäss Anspruch 8 enthalten.

14. Flüssige Farbstoffzubereitungen zum Färben von Polyacrylnitrilmaterialien, dadurch gekennzeichnet, dass sie mindestens einen Farbstoff gemäss Anspruch 8 enthalten.

15. Verfahren zum Trichromie-Färben von Polyacrylnitrilmaterialien mit kationischen Farbstoffen, dadurch gekennzeichnet, dass man einen blauen Farbstoff der Formel (1) gemäss Anspruch 1 zusammen mit einem gelben oder orangenen und einem roten kationischen Farbstoff verwendet.

16. Verfahren zum Färben von Polyacrylnitrilmaterialien in marineblauen oder schwarzen Nuancen, dadurch gekennzeichnet, dass man einen blauen Farbstoff der Formel (1) gemäss Anspruch 1 zusammen mit einem gelben oder orangenen und einem roten und gegebenenfalls einem weiteren blauen Farbstoff verwendet.

17. Verfahren gemäss einem der Ansprüche 15 oder 16, dadurch gekennzeichnet, dass man einen blauen Farbstoff der Formel (1) gemäss Anspruch 1, einen gelben Farbstoff der Formel 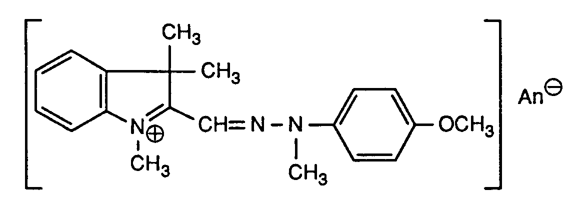 und einen roten Farbstoff der Formel 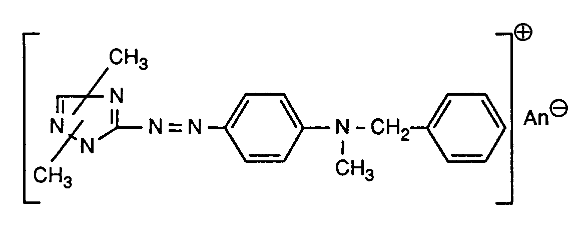 wobei An^{⊖} unabhängig voneinander jeweils ein Anion bedeutet, verwendet.

## Claims

1. A process for the dyeing of polyacrylonitrile materials, which comprises using a dye of the formula 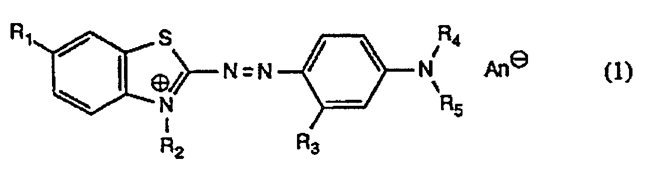 in which
R₁ is C₁-C₄alkoxy or chlorine,
R₂ is C₁-C₄alkyl,
R₃ is C₁-C₄alkyl,
R₄ is C₁-C₂alkyl,
R₅ is hydroxyethyl or hydroxypropyl, and
An^{⊖} is an anion, in which R₃ and R₄ are not both ethyl at the same time.

2. A process according to claim 1, wherein a dye of the formula (1) is used in which R₁ is methoxy or ethoxy.

3. A process according to either of claims 1 or 2, wherein a dye of the formula (1) is used in which R₂ is methyl or ethyl, in particular methyl.

4. A process according to any one of claims 1 to 3, wherein a dye of the formula (1) is used in which R₃ is methyl or ethyl, in particular methyl.

5. A process according to any one of claims 1 to 4, wherein a dye of the formula (1) is used in which R₄ is methyl or ethyl and R₅ is hydroxyethyl.

6. A process according to claim 1, wherein a dye of the formula 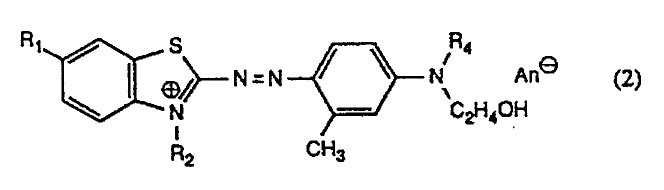 is used in which R₂ and R₄, independently of one another, are each methyl or ethyl and R₁ is methoxy or ethoxy.

7. A process according to claim 6, wherein a dye of the formula (2) is used in which R₁ is methoxy, R₂ is methyl and R₄ is ethyl.

8. A dye of the formula 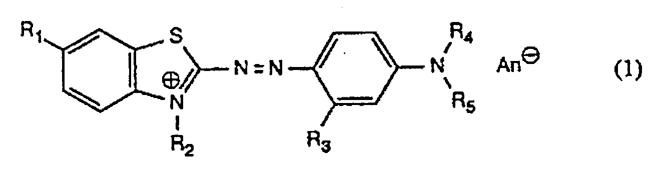 in which
R₁ is C₁-C₄alkoxy or chlorine,
R₂ is C₁-C₄alkyl,
R₃ is C₁-C₄alkyl,
R₄ is C₁-C₂alkyl,
R₅ is hydroxyethyl or hydroxypropyl, and
An^{⊖} is an anion, in which R₃ and R₄ are not both ethyl at the same time.

9. A dye according to claim 8, in which R₁ is methoxy or ethoxy, R₂ and R₄, independently of one another, are methyl or ethyl, R₃ is methyl and R₅ is hydroxyethyl.

10. A dye of the formula 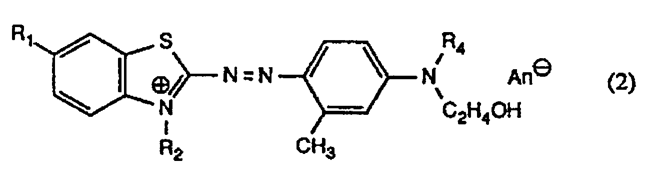 in which R₂ and R₄, independently of one another, are each methyl or ethyl and R₁ is methoxy or ethoxy.

11. A process for the preparation of a dye according to claim 8, which comprises diazotizing a compound of the formula 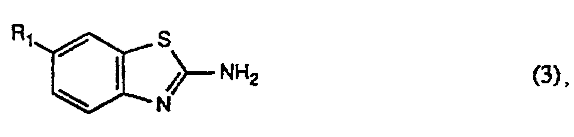 coupling the product onto a coupling component of the formula 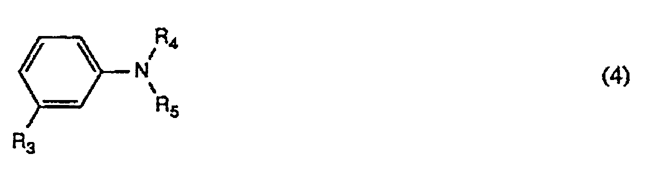 and quaternizing the coupling product with a compound of the formula
R₂-An (5)
in which R₁, R₃, R₄, R₅ and R₂ are defined as under formula (1) and An is a radical which can be converted into the anion An^{⊖} upon quaternization.

12. A dyed polyacrylonitrile material obtained by the process according to any one of claims 1 to 7.

13. A solid dye preparation for the dyeing of polyacrylonitrile materials, which contains at least one dye according to claim 8.

14. A liquid dye preparation for the dyeing of polyacrylonitrile materials, which contains at least one dye according to claim 8.

15. A process for the trichromatic dyeing of polyacrylonitrile materials by means of cationic dyes, which comprises using a blue dye of the formula (1) according to claim 1 together with a yellow or orange and a red cationic dye.

16. A process for the dyeing of polyacrylonitrile materials in navy or black shades, wherein a blue dye of the formula (1) according to claim 1 is used together with a yellow or orange and a red and, if desired, a further blue dye.

17. A process according to either one of claims 15 or 16, wherein a blue dye of the formula (1) according to claim 1 is used together with a yellow dye of the formula 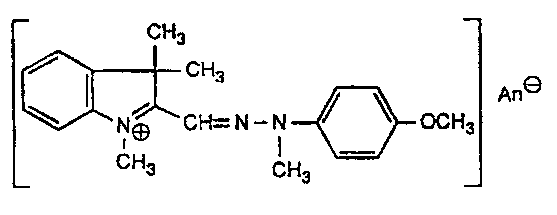 and a red dye of the formula 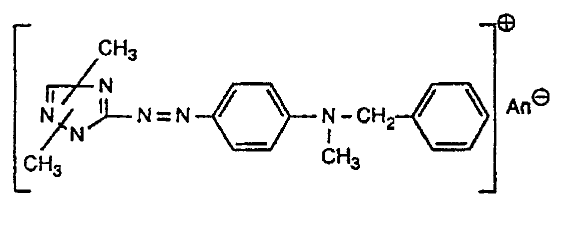 in which An^{⊖}, independently of one another, are each an anion.

## Revendications

1. Procédé pour la teinture de matériaux en polyacrylonitrile, caractérisé en ce que l'on utilise un colorant de formule 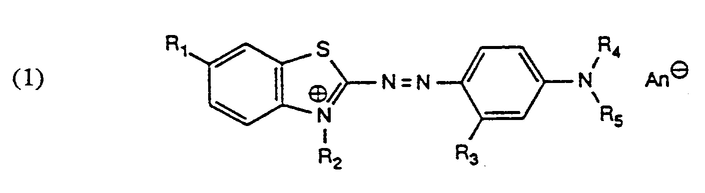 dans laquelle R₁ représente un groupe alcoxy en C₁-C₄ ou un atome de chlore, R₂ un groupe alkyle en C₁-C₄, R₃ un groupe alkyle en C₁-C₄, R₄ un groupe alkyle en C₁-C₂, R₅ un groupe hydroxyéthyle ou hydroxypropyle et An⁻ un anion, R₃ et R₄ ne devant pas être tous les deux des groupes éthyle.

2. Procédé conforme à la revendication 1, caractérisé en ce que l'on utilise un colorant de formule (1) dans lequel R₁ représente un groupe méthoxy ou éthoxy.

3. Procédé conforme à une des revendications 1 ou 2, caractérisé en ce que l'on utilise un colorant de formule (1) dans lequel R₂ représente un groupe méthyle ou éthyle, de préférence un groupe méthyle.

4. Procédé conforme à une des revendications 1 à 3, caractérisé en ce que l'on utilise un colorant de formule (1) dans lequel R₃ représente un groupe méthyle ou éthyle, de préférence un groupe méthyle.

5. Procédé conforme à une des revendications 1 à 4, caractérisé en ce que l'on utilise un colorant de formule (1) dans lequel R₄ représente un groupe méthyle ou éthyle et R₅ un groupe hydroxyéthyle.

6. Procédé conforme à la revendication 1, caractérisé en ce que l'on utilise un colorant de formule 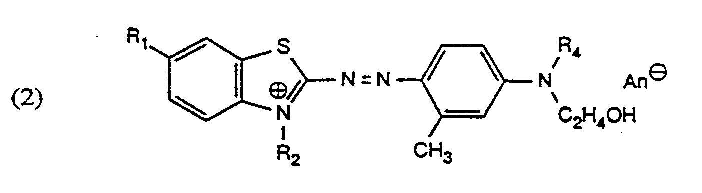 dans laquelle R₂ et R₄ représentent indépendamment l'un de l'autre un groupe méthyle ou éthyle et R₁ un groupe méthoxy ou éthoxy.

7. Procédé conforme à la revendication 6, caractérisé en ce que l'on utilise un colorant de formule (2) dans lequel R₁ est un groupe méthoxy, R₂ un groupe méthyle et R₄ un groupe éthyle.

8. Colorants de formule 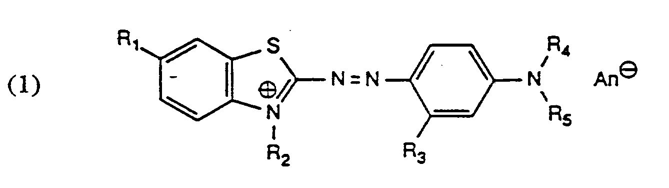 dans laquelle R₁ représente un groupe alcoxy en C₁-C₄ ou un atome de chlore, R₂ un groupe alkyle en C₁-C₄, R₃ un groupe alkyle en C₁-C₄, R₄ un groupe alkyle en C₁₋C₂, R₅ un groupe hydroxyéthyle ou hydroxypropyle et An⁻ un anion, R₃ et R₄ ne devant pas être tous les deux des groupes éthyle.

9. Colorant conforme à la revendications 8, dans lequel R₁ représente un groupe méthoxy ou éthoxy, R₂ et R₄ indépendamment l'un de l'autre un groupe méthyle ou éthyle, R₃ un groupe méthyle et R₅ un groupe hydroxyéthyle.

10. Colorants de formule 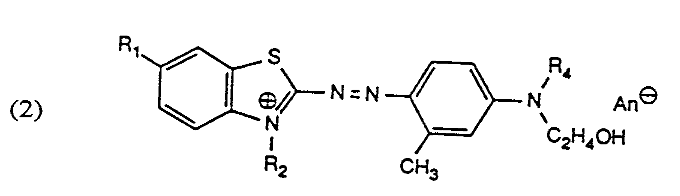 dans laquelle R₂ et R₄ représentent indépendamment l'un de l'autre un groupe méthyle ou éthyle et R₁ un groupe méthoxy ou éthoxy.

11. Procédé pour la préparation des colorants conformes à la revendication 8, caractérisé en ce que l'on réalise la diazotation d'un composé de formule 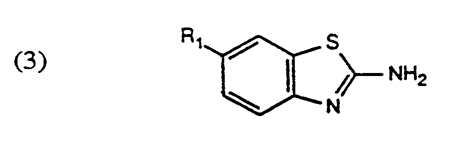 que l'on copule ensuite ce composé diazoté avec un copulant de formule, 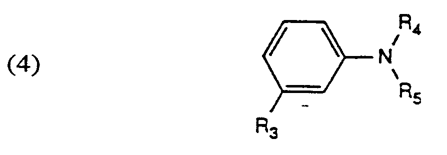 et que l'on quaternise le produit de copulation avec un composé de formule
(5) R₂-An
R₁, R₃, R₄, R₅ et R₂ étant définis comme pour la formule (1), et An représentant le résidu fournissant l'anion An⁻ du composé quaternisée.

12. Matériau en polyacrylonitrile teint par le procédé conforme à une des revendications 1 à 7.

13. Préparation solide de colorants pour la teinture de matériaux en polyacrylonitrile, caractérisée en ce qu'elle contient au moins un colorant conforme à la revendication 8.

14. Préparation liquide de colorants pour la teinture de matériaux en polyacrylonitrile, caractérisée en ce qu'elle contient au moins un colorant conforme à la revendication 8.

15. Procédé pour la teinture en trichromie de matériaux en polyacrylonitrile avec des colorants cationiques, caractérisé en ce que l'on utilise un colorant bleu de formule (1) conforme à la revendication 1 ensemble avec un colorant cationique jaune ou orange et un colorant cationique rouge.

16. Procédé de teinture de matériaux en polyacrylonitrile en des nuances bleu-marine ou noires, caractérisé en ce que l'on utilise un colorant bleu de formule (1) conforme à la revendication 1 ensemble avec un colorant jaune ou orange, un colorant rouge et éventuellement un autre colorant bleu.

17. Procédé conforme à une des revendications 15 ou 16, caractérisé en ce que l'on utilise un colorant bleu de formule (1) conforme à la revendication 1, un colorant jaune de formule 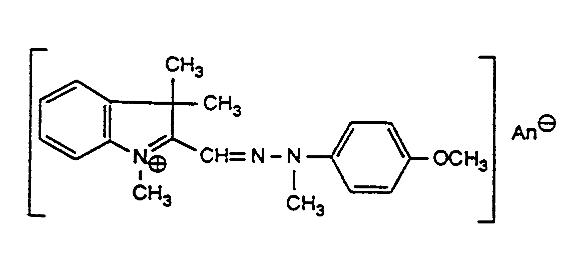 et un colorant rouge de formule 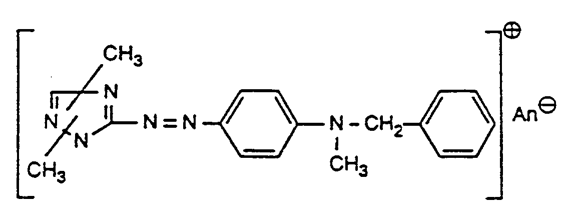 An⁻ représentant indépendamment l'un de l'autre un anion.
